# EUROPEAN PATENT APPLICATION

(11) **EP 2 747 247 A2**
(43) Date of publication of application: **25.06.2014**
(21) Application number: 13197615.1
(22) Date of filing: 17.12.2013
(51) Int. Cl.: H02K 1/18, H02K 5/24

(54) **Stator and motor including the same**

(30) Priority: 18.12.2012 KR 20120147957
(71) Applicant: LG Innotek Co., Ltd., Seoul 100-714 (KR)
(72) Inventor: Woo, Shung Hun, 100-174 Seoul (KR)
(74) Representative: Cabinet Plasseraud

(57) **Abstract**

Provided are a stator and a motor including the same. The motor includes a housing; and a stator coupled to an inner space portion of the housing, wherein the stator includes a stator core having an outer surface on which a first surface spaced apart from an inner circumferential surface of the housing and a second surface in contact with an inner circumferential surface of the housing are alternately disposed, and a coil wound around the stator core..

## Description

### CROSS-REFERENCE TO RELATED APPLICATION

This application claims priority to and the benefit of Korean Patent Application No. 10-2012-0147957, filed on December 18, 2012, the disclosure of which is incorporated herein by reference in its entirety.

### BACKGROUND

### 1. Field of the Invention

The present invention relates to a stator and a motor including the same, in particular, to a stator and a steering motor including the same.

### 2. Discussion of Related Art

A steering system is a device for guaranteeing steering stability of a motor vehicle and performs a function of assisting with a steering operation with additional power.

Recently, instead of hydraulic auxiliary power steering systems, electronic power steering systems (hereinafter referred to as "EPS systems") having characteristics of less power loss and excellent accuracy have been widely utilized. EPS systems include a speed sensor, a torque angle sensor, a torque sensor and the like.

An electronic control unit (ECU) senses driving conditions of a motor vehicle through sensors provided in an EPS system and drives a motor according to the sensed driving conditions. Therefore, turning stability of the motor vehicle is guaranteed and a restitution force is rapidly provided to enable the driver to safely drive the motor vehicle.

In such an EPS system, a motor (hereinafter referred to as an "EPS motor") assists with torque for manipulating a handle to enable a driver to perform a steering operation with less force. A brushless direct current (BLDC) motor may be employed as an EPS motor. A BLDC motor is a DC motor in which electronic rectifier elements are installed instead of mechanical contact elements such as a brush and a commutator.

An EPS motor may include a housing, a bracket coupled to an upper portion of the housing, a rotational shaft having both end portions rotatably supported by the housing and the bracket, a stator disposed on an inner circumferential surface of the housing and a rotor installed on an outer circumferential surface of the rotational shaft.

Vibration of the rotational shaft is transmitted to the housing via a bearing. Therefore, the vibration is transmitted to the stator which is in contact with the housing and this causes generation of noise. In addition, the housing which is in contact with the stator is influenced by an alternating magnetic field, generating hysteresis loss, which is a subclassification of core loss. Friction torque of an EPS motor is affected by this hysteresis loss

### SUMMARY OF THE INVENTION

The present invention is directed to a stator which can mitigate friction torque between a housing and a stator, and a motor including the same.

According to an aspect of the present invention, there is provided a stator including a stator core having a space portion formed therein for coupling a rotor thereto, and having an outer surface on which a first surface spaced from an inner circumferential surface of a motor housing and a second surface in contact with an inner circumferential surface of the motor housing are alternately formed; and a coil wound around the stator core.

According to an aspect of the present invention, there is provided a motor including a housing; and a stator coupled to an inner space portion of the housing, wherein the stator includes a stator core having an outer surface on which a first surface spaced apart from an inner circumferential surface of the housing and a second surface in contact with an inner circumferential surface of the housing are alternately disposed, and a coil wound around the stator core.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a view showing one example of stator and a rotor to be coupled with a housing;
FIG. 2 is a side-sectional view showing an electronic power steering (EPS) motor according to one embodiment of the present invention;
FIG. 3 is a side-sectional view showing a state in which a housing and a stator of an EPS motor according to one embodiment of the present invention are disassembled;
FIG. 4 is a view schematically showing a structure of a stator of an EPS motor according to one embodiment of the present invention;
FIG. 5 is a view schematically showing an assembled structure of a housing and a stator of an EPS motor according to one embodiment of the present invention; and
FIG. 6 is a graph showing the noise and friction torque mitigation effect according to a thickness of an air gap between a stator core and an inner circumferential surface of a housing of an EPS motor according to one embodiment of the present invention.

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the spirit and scope of the invention.

Since the present invention may be modified in various ways and may have various embodiments, specific embodiments are illustrated in the drawings and are described in detail in the present specification. However, it should be understood that the present invention is not limited to specific disclosed embodiments, but includes all modifications, equivalents and substitutes encompassed within the spirit and technical scope of the present invention.

Terms including the ordinal numeral such as "first," "second," etc. may be used to describe various components, but the components are not limited by such terms. The terms are used only for the purpose of distinguishing one component from other components. For example, a first component may be designated as a second component without departing from the scope of the present invention. In the same manner, the second component may be designated as the first component. The term "and/or" encompasses both combinations of the plurality of related items disclosed and any item from among the plurality of related items disclosed.

When an arbitrary component is described as being "connected to" or "linked to" another component, although this may refer to a case in which the arbitrary component is directly connected or linked to the second component, it may also refer to a case in which there is still another component or components therebetween. In contrast, when an arbitrary component is described as being "directly connected to" or "directly linked to" another component, this should be understood to mean that there are no other components therebetween.

The terms used in the specification of the present application are used only to illustrate specific embodiments, and are not intended to limit the present invention. A singular expression can include a plural expression as long as the context does not indicate otherwise. In the present specification, the terms "include" and "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

Unless otherwise specified, all of the terms which are used herein, including the technical or scientific terms, have the same meanings as those that are generally understood by a person having ordinary knowledge in the art to which the present invention pertains. The terms defined in a generally used dictionary must be understood to have meanings identical to those used in the context of the related art, and are not to be construed to have ideal or excessively formal meanings unless explicitly specified in the present specification.

Hereinafter, the embodiment of the present invention will be described in detail with reference to the accompanying drawings. Structural elements which are the same as or correspond to structural elements that have already been illustrated will be indicated by the same reference numeral, and illustration thereof omitted.

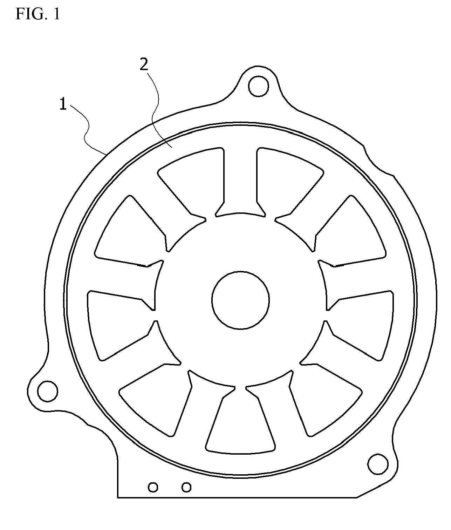

FIG. 1 is a view schematically showing an assembled structure of a housing and a stator of an electronic power steering motor (hereinafter referred to as an "EPS motor").

Referring to FIG. 1, a housing 1 has an approximately cylindrical shape and has an opened upper part. A stator 2 is assembled in an inner space of the housing 1.

The stator 2 is coupled with the housing 1 by means of a hot press fitting method and an outer surface of the stator is in contact with an inner circumferential surface of the housing 1.

Vibration of a rotational shaft is transmitted to the housing 1 through a bearing. Thus, the vibration is transmitted to the stator 2 which is in contact with the housing 1 and this vibration causes vibration noise. In addition, the housing 1 which is in contact with the stator 2 is influenced by an alternating magnetic field, generating hysteresis loss, which is a subclassification of core loss. Friction torque of the EPS motor is affected by this hysteresis loss

In order to solve the above problem, one embodiment of the present invention provides a stator core having an outer surface on which a first surface spaced apart from an inner circumferential surface of the housing and a second surface which is in contact with an inner circumferential surface of the housing are alternately disposed.

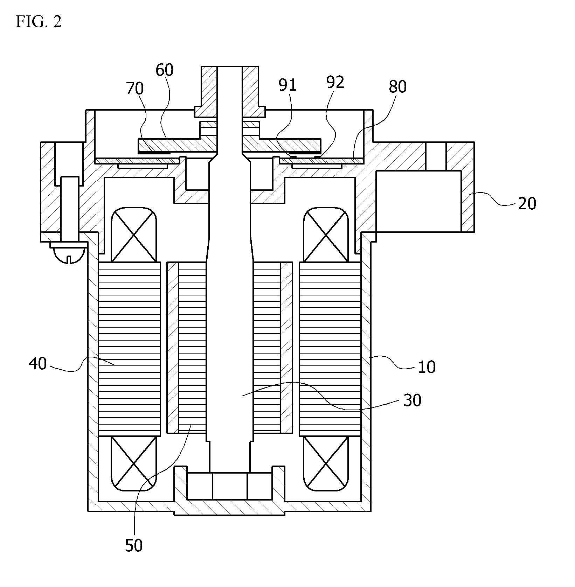

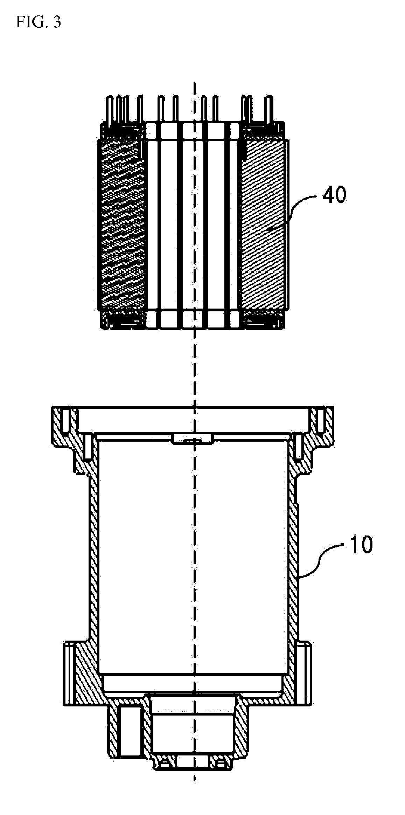

FIG. 2 is a side-sectional view showing the EPS motor according to one embodiment of the present invention, and FIG. 3 is a side-sectional view showing a state in which the housing and the stator of the EPS motor according to one embodiment of the present invention are disassembled.

Referring to FIG. 2 and FIG. 3, the EPS motor includes a housing 10, a bracket 20, a rotational shaft 30, a stator 40 and a rotor 50.

The housing 10 has an approximately cylindrical shape and has an opened upper part. The stator 40 and the rotor 50 are received in an inner space of the housing 10. Also, the bracket 20 is coupled to an upper portion of the housing 10 to form an exterior of the EPS motor.

The rotational shaft 30 is rotatably supported by the housing 10 and the bracket 20.

A steering shaft of a motor vehicle is connected to an upper portion of the rotational shaft 30 to provide power to assist with a steering operation.

The rotor 50, which includes a plurality of magnets and a rotor core, is coupled to an outer circumferential surface of the rotating shaft 30. The stator 40 including a stator core and a coil is coupled to an inner circumferential surface of the housing 10 to provide an outer circumferential surface of the rotor 50 with the electromagnetic force.

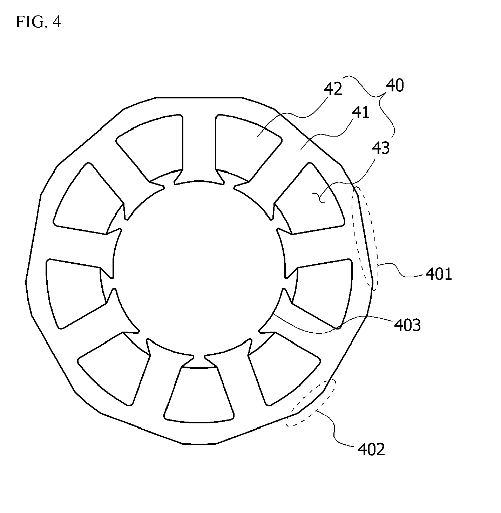

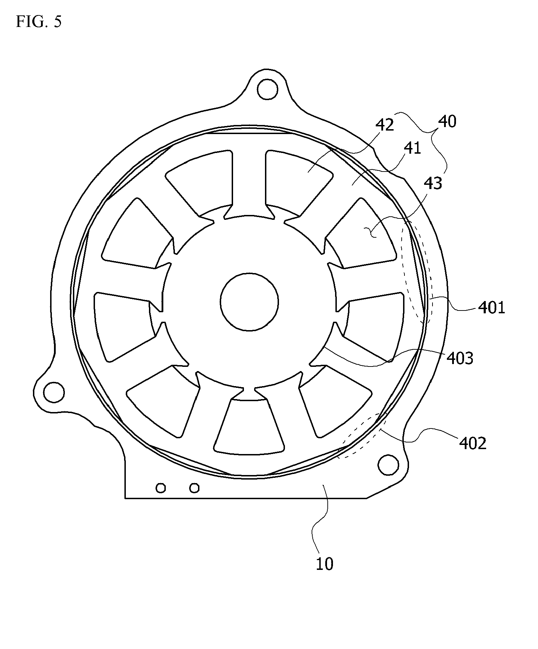

The stator 40 is disposed in the housing 10 and includes the stator coil and the coil wound around the stator core. A structure of the stator 40 will be illustrated in detail later with reference to FIG. 4 and FIG. 5.

The hot press fitting method can be employed for carrying out a process for coupling the stator 40 and the housing 10. When the housing 10 is heated, a metal material constituting the housing 10 is expanded so that an inner diameter of the housing 10 is increased. In this state, once the stator 40 is inserted into the housing and the housing 10 is then cooled, the housing 10 is contracted so that the housing comes in contact with and rubs an outer circumferential surface of the stator 40. As a result, the stator 40 is fixedly coupled to an inner circumferential surface of the housing 10.

The rotor 50 is coupled to an outer circumferential surface of the rotational shaft 30. The rotor 50 is disposed inside the stator 40.

The rotor 50 consists of the rotor core and the magnet.

When a current is applied to the stator 40, the rotor 50 is rotated by an electromagnetic interaction between the stator 40 and the rotor 50. Thus, the rotational shaft 30 coupled with the rotor 50 is rotated in response to rotation of the rotor 50. Since the rotating shaft 30 is connected to a steering shaft of a motor vehicle via a reduction gear which is not shown in the drawings, the steering shaft can also be rotated by means of rotation of the rotational shaft 30. Therefore, the EPS motor assists with rotation of the steering shaft which is rotated in response to rotation of a steering wheel manipulated by a driver.

A printed circuit board 80 is coupled to an upper surface of the bracket 20.

Sensors 91 and 92 are arranged on an upper surface of the printed circuit board 80. The sensors 91 and 92 sense a change of polarity or magnetic flux of a sensing magnet 70 to output a sensing signal utilized for calculating a rotation angle of the rotor 50. A hall IC or an encoder IC may be employed as each of the sensors 91 and 92.

A plate 60 is disposed above and spaced from the printed circuit board 80, and the plate faces the printed circuit board 80. The plate 60 is coupled to the shaft 30 so that the plate is rotated together with the rotating shaft.

The sensing magnet 70 facing the sensors 91 and 92 disposed on an upper surface of the printed circuit board 80 is disposed on a lower surface of the plate 60. The sensing magnet 70 is coupled to the rotational shaft 30 so that the sensing magnet is rotated according to rotation of the rotational shaft 30.

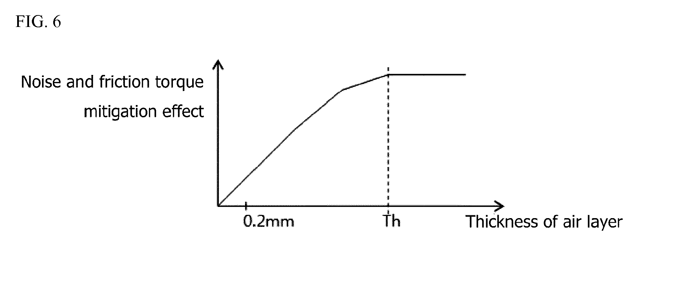

FIG. 4 is a view schematically showing a structure of the stator of the EPS motor according to one embodiment of the present invention. Also, FIG. 5 is a view schematically showing an assembled structure of the housing and the stator of the EPS motor according to one embodiment of the present invention. In addition, FIG. 6 is a graph showing the noise and friction torque mitigation effect according to a thickness of an air gap between the stator core and an inner circumferential surface of the housing of the EPS motor according to one embodiment of the present invention.

Referring to FIG. 4 and FIG. 5, the stator 40 includes the stator core 41, a coil (not shown) wound around the stator core 41 and a coil inserting part 43 in which the coil 42 is inserted.

A space is formed at a central portion of the stator core 41 for receiving the rotor 50 (see FIG. 2) therein.

A plurality of coil 42 inserting parts 43 are radially formed inside of the stator core 41 along an inner circumferential surface of the stator core 41. A shape of the coil 42 inserting part 43 may be variously changed according to a characteristic of the motor to which the stator is applied.

The coil 42 inserting part 43 can be provided on the stator core 41 in the form of a through hole having an open upper side.

The coil 42 inserting part 43 has a cutting portion formed on an inner circumferential surface of the stator core 41 in a longitudinal direction. The coil 42 inserting part 43 may be formed by stator teeth 403 formed in a radial direction and disposed along an inner circumferential surface of the stator core 41.

Each of the stator teeth 403 has a certain width and may extend from an inner circumferential surface toward a center of the stator core 41.

A wire is wound to form the coil 42 having a shape corresponding to that of the coil 42 inserting part 43, and a plurality of coils are coupled with the coil 42 inserting parts 43.

A first surface 401 which is spaced from an inner circumferential surface of the housing 10 and a second surface 402 which is in contact with an inner circumferential surface of the housing 10 are alternately provided on an outer surface of the stator core 41.

The first surface 401 may be a flat surface formed by plane-cutting an outer circumferential surface of the cylindrical stator core 41 in the longitudinal direction.

The first surface 401 may be formed such that a central portion of the first surface is spaced apart from an inner circumferential surface of the housing 10 with a certain gap. For example, the first surface 401 may be formed such that an air gap having a thickness of 0.2 mm to 2.0 mm is provided between a central portion of the first surface 401 and an inner circumferential surface of the housing 10 corresponding to a central portion of the first surface.

As the thickness of the air gap between a central portion of the first surface 401 and an inner circumferential surface of the housing 10 is increased, vibration transmitted from the housing 10 to the stator core 41 is reduced so that the noise and the friction torque caused by the vibration can be mitigated.

FIG. 6 is a graph showing the improvement effect according to the thickness of the air gap between the central portion of the first surface 401 and an inner circumferential surface of the housing 10. Referring to FIG. 6, as a size of the air gap is increased, the noise and friction torque mitigation effect is increased, and if a size of the air gap is larger than approximately a critical value, the noise and friction torque mitigation effect is maintained at a certain level. The critical value of thickness of the air gap may be 2.0 mm, but is not limited thereto.

A region within an outer region of the stator core 41 corresponding to 20% to 80% of a circumferential length of the stator core 41 may be plane-cut to form the first surfaces 401. In other words, the region that is plane-cut from the outer region of the stator core 41 to form the first surfaces 401 may be 20% to 80% of a circumferential length of the stator core 41.

Therefore, an area of an outer surface of the stator core 41 that is in contact with the inner circumferential surface of the housing 10 may be 20% to 80% of the area of an outer surface of the stator core before forming the first surfaces 401. In other words, assuming that the area of the outer surface of the stator core 41 is 100 before forming the first surfaces 401, the first surfaces 401 may be formed such that an area of the second surfaces 402 left after forming the first surfaces 401 spaced apart from in an inner circumferential surface of the housing 10 is 20 to 80.

The first surface 401 may correspond to a region of an outer circumferential surface of the stator core 41 in which the amount of the magnetic flux is minimized. For example, the first surface 401 may be formed by plane-cutting an outer region corresponding to the tooth 403 of the stator core 41.

The second surfaces 402 are regions of an outer circumferential surface of the stator core 41 on which the first surface 401 is not formed, and the second surface 402 may be a curved surface with a curvature which is the same as that of an inner circumferential surface of the housing 10 to allow the second surface to be in contact with an inner circumferential surface of the housing 10. In other words, the second surfaces 402 may have a minimum area by which the stator core 41 is fixed to the housing 10. For example, the second surfaces 402 may be formed on 20% to 80% of a circumference of the stator core 41.

As described above, if an outer surface of the stator core 41 is plane-cut to minimize an outer surface of the stator core 41 which is in contact with an inner circumferential surface of the housing 10, vibration and noise transmitted from the housing 10 to the stator core 41 can be blocked to mitigate vibration and noise generated from the stator 40. In addition, a contact surface between the stator core 41 and the housing 10 is minimized to block an alternating magnetic field so that a hysteresis loss is minimized to mitigate friction torque.

Meanwhile, although one embodiment of the present invention illustrates that the first surface 401 is formed by a plane-cutting method, the present invention is not limited thereto. According to one embodiment of the present invention, the first surface 401 may be formed by another method such as a forming method. For example, the stator core 41 may be formed such that only an outer region corresponding to 20 to 80% of the circumferential length is in contact with an inner circumferential surface of the housing 10.

According to one embodiment of the present invention, an outer surface of the stator core which is in contact with an inner circumferential surface of the housing is minimized so that a magnitude of vibration transmitted from the housing to the stator core is reduced, and as a result, noise of the EPS motor is mitigated.

In addition, the present invention is advantageous in that a contact surface between the stator core and the housing is minimized so that hysteresis loss is minimized to mitigate friction torque.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A stator, comprising:
a stator core (41) having a space portion formed therein for coupling a rotor (50) thereto, and having an outer surface on which a first surface (401) spaced from an inner circumferential surface of a motor housing (10) and a second surface (402) in contact with an inner circumferential surface of the motor housing (10) are alternately formed; and
a coil (42) wound around the stator core (41).

2. The stator of claim 1, wherein the first surface (401) is formed by cutting an outer region of the cylindrical stator core (41) in the lengthwise direction.

3. The stator of claim 2, wherein the first surface (401) is a region which is 20 to 80% of a circumference length of the stator core (41) in the lengthwise direction.

4. The stator of claim 2, wherein the first surface (401) is arranged on a region corresponding to a tooth (403) of the stator core (41).

5. The stator of claim 2, wherein an air gap is arranged between a central portion of the first surface (401) and an inner circumferential surface of the housing, and a thickness of the air gap is 0.2 mm to 2.0 mm.

6. The stator of claim 1, wherein the second surface (402) is 20% to 80% of a circumferential length of the stator core (41).

7. A motor, comprising:
a housing (10);
a stator (40) coupled to an inner space portion of the housing (10);
a rotor which is rotatably disposed in the stator; and
a rotating shaft which is rotatably coupled in the rotor,
wherein the stator (40) includes a stator core (41) having an outer surface on which a first surface (401) spaced apart from an inner circumferential surface of the housing (10) and a second surface (402) in contact with an inner circumferential surface of the housing (10) are alternately disposed, and a coil (42) wound around the stator core.

8. The motor of claim 7, wherein the first surface (401) is formed by cutting an outer region of the cylindrical stator core in the lengthwise direction.

9. The motor of claim 8, wherein the first surface (401) is a region which is 20 to 80% of a circumference length of the stator core (41) in the lengthwise direction.

10. The motor of claim 8, wherein the first surface (401) corresponds to a region at which the amount of the magnetic flux is minimized.

11. The motor of claim 10, wherein the first surface (401) is a region corresponding to a tooth (403) of the stator core (41).

12. The motor of claim 7, wherein an air gap is formed between a central portion of the first surface (401) and an inner circumferential surface of the housing (10), and a thickness of the air gap is 0.2 mm to 2.0 mm.

13. The motor of claim 7, wherein the second surface (402) has a curvature which is the same as that of an inner circumferential surface of the housing (10).

14. The motor of claim 13, wherein the second surface (402) is 20% to 80% of a circumferential length of the stator core (41).
